Europäisches Patentamt

European Patent Office

Office européen des brevets

(11) Publication number: **0 381 315**
**A1**

# EUROPEAN PATENT APPLICATION

(21) Application number: 90300182.4

(22) Date of filing: 08.01.90

(51) Int. Cl.5: **C04B 41/48, C08L 95/00,**
**E04D 5/10, E04F 15/16,**
**B32B 11/00, B32B 11/02**

(30) Priority: 06.01.89 GB 8900264

(43) Date of publication of application:
**08.08.90 Bulletin 90/32**

(84) Designated Contracting States:
**AT BE CH DE DK ES FR GB IT LI LU NL**

(71) Applicant: **FIBRESCREED LIMITED**
**Bellbrook Estate**
**Uckfield East Sussex TN22 1QL(GB)**

(72) Inventor: **McIntosh, James**
**23 Keld Drive**
**Uckfield, East Sussex(GB)**
Inventor: **Lucas, Graham John**
**41 Hunters Way**
**Uckfield, East Sussex(GB)**

(74) Representative: **Williams, Trevor John et al**
**J.A. KEMP & CO. 14 South Square Gray's Inn**
**London WC1R 5EU(GB)**

(54) **Safety surface.**

(57) A safety surface material is applied to a site either as separate tiles or as superimposed layers. The safety material comprises a base layer of rubber chips bound with bitumen and a flexible wear layer, preferably thinner than the base layer. The wear layer may be of rubber chips bound with synthetic resin material, for example a flexible epoxy resin or a flexible polyurethane. Alternatively, and preferably, the wear layer may comprise rubber chips bound with a block copolymer polymerised bituminous material. This is preferably hot applied to a bituminous base layer. Preferably one or both of the layers are reinforced with fibres, for example glass fibres although metal filaments may also be used, in the base layer, as reinforcing fibres.

EP 0 381 315 A1

## SAFETY SURFACE

This invention relates to an improved safety surface material. There has been an increasing demand over recent years for a safety surface material for use in playgrounds and playdecks which have a degree of resilience whilst still being wear-resistant so as to provide a long-life surface on which there is a reduced chance of serious injury being caused to a child or other person falling violently onto it, for example from a piece of play equipment.

Various proposals have been put forward in the past for such safety areas but these have usually comprised a layer of rubbery or foam plastic material which not only is expensive, but also which is not particularly wear-resistant, especially in an outdoor environment where it is exposed to the weather throughout the year as well as repeated wear from users of play equipment in a playground.

An object of the present invention is to provide an improved safety surface material which is relatively economical to produce, which has good wear-resistance properties and yet which still has the degree of resilience necessary to protect the child or other person who may fall upon it. While the present invention has been considered generally in terms of children's play areas, it will be appreciated that a principal use of a resilient safety surface of the present invention is as a relatively thin wear surface in other locations where a resilient wear-resistant but protective layer may be required on a large area floor or site.

According to the preferred aspect of the present invention, there is provided a safety surface material comprising a flexible wear layer comprising a mixture of polymerised bitumen and rubber chips in the size range of 2 to 10 mm, preferably 2 to 7 mm.

Another aspect of the invention provides a safety surface material comprising a base layer comprising rubber chips bound with a bitumen material and a flexible wear layer applied thereto. One construction suitable for a child's play area has a wear layer which comprises rubber chips bound with a flexible synthetic plastics material. The flexible synthetic plastics material preferably is an epoxy resin or polyurethane. While we have referred above to the wear layer comprising rubber chips bound with the flexible plastics material, in some cases the flexible plastics material can simply be applied without additional rubber chips to the surface of the base layer, a good bond being achievable due to the flexible plastics material being receivable in the interstices of the upper surface onto the base layer defined by the bound rubber chips. It will be appreciated that variations in the wear-resistance and the ability resiliently to absorb shock can be achieved by varying the thickness and density of the wear layer and, indeed, by varying the chip size and degree to which the base layer has been compacted.

In an alternative, preferred, embodiment, instead of using a flexible synthetic plastics material, the wear layer itself may use a bituminous material being used to bind rubber chips, preferably smaller than those in the base layer, to form a compacted surface. While the bituminous material used may be applied as a bituminous slurry, that is as a mixture of bitumen material and sand or other powder filler, it is preferably hot applied as a block copolymer modified bitumen containing rubber granules mixed therein. A good bond is achieved where the hot bituminous wear layer is applied to a base layer which itself is bituminous. Further rubber chips can be rolled into the hot wear layer. Variation in the resilient qualities of the overall surface layer and variations in the wear resistance properties can be achieved by varying the relative thicknesses of the base and wear layer and by varying the chip size and by varying the actual materials used in the wear layer. Generally, the flexible plastics material bonding small rubber chips might only be used for the wear layer where used in a small children's playground. The bituminous material wear layer is generally preferred, especially where larger areas are required to be covered, and especially where cost factors are important.

Preferably the base layer and possibly also the wear layer are reinforced with fibres included in that layer. Such fibres may comprise glass fibres or instead, or additionally, metal filaments may be used in the base layer.

Selected colouring agents may be included in the wear layer and in this way coloured patterns can be achieved in the layer as applied to the play area, particularly where the safety surface material is applied in the form of preformed tiles or strips, rather than being applied as a continuous screed.

The more economical way of applying the material of the present invention is by way of applying the base layer as a continuous screed over the surface to be covered and then applying the wear layer thereover. A good bond can be achieved between the two layers using a resin bound wear layer where the base layer is still soft at the time the rolled application of the wear layer as a degree of penetration of one layer into the other can be achieved so that there is a zone of gradual change between the resin bound wear layer and the bitumen bound base layer. However, the bond between a hot applied bituminous bound wear layer and a bituminous base layer is very good. Where the wear layer comprises a mixture of binding material and rubber chips, the wear layer can either be applied, as is preferred, as a mixture of the chips and binding material or these two materials may be applied separately and caused to combine to form a bound layer by a subsequent compacting operation.

A further aspect of the present invention provides a method of applying a safety surface material to a site wherein strips or tiles are formed of material of the invention and are then applied to the site in mutually abutting relation. As indicated above, an alternative method of applying the safety surface material comprises applying the base layer to the site and then covering this base layer with the wear layer.

In an exemplary form of the present invention, the chip size of the base layer chips lies in the range of 2 to 10 mm with the chip size for the rubber chips in the wear layer being the same as, or smaller than, that of the base layer. Preferably, at least the base layer is reinforced with fibres, for example glass fibres, included in the respective layer although in some cases metal filaments may also, or instead, be included in the base layer. Such metal filaments may be provided where the rubber chips used in the layer have been produced by chopping old metal reinforced vehicle tyres.

A selected colouring agent may be included in the wear layer to give a desired finish and where the material is in the form of tiles or strips, by having different tiles or strips coloured differently, a desired pattern can be achieved on site. Alternatively, different batches of the wear layer may be of different colours and applied in turn to obtain the required pattern.

Conveniently, the base layer and the wear layer together may have a total thickness of from 50 to 100 mm. A total thickness of approximately 75 mm has been found to provide a suitable final product with the surface layer having a thickness of up to 15 xm, preferably in the range of 2 to 10 mm, whereby the major part of the thickness of the safety surface material is comprised by the cheaper, bitumen bound, base layer. Whilst various flexible bitumen materials may be used, a polymer modified bitumen has been found to be particularly suitable.

Thus, a preferred material for use as a topping or over a full depth comprises bitumen which has been polymerised by the addition of block copolymers of styrene and butadiene or of styrene and isoprene or a mixture of such block copolymers. To this polymerised bitumen is added up to 50% by weight of rubber granules in the size range of 2 to 7 mm.

A batch of one particular example which is particularly useful comprises:-
250 litres 100 pen bitumen as defined using a standard penetration test
25 kg styrene butadiene block copolymer
80 kg 2 to 3 mm rubber granules.

This blend can be laid up to 1 cm thick, alone or as a topping to a deep surface but preferably to an average depth of 3 to 4 mm. In order to improve the shock resistance, the whole may be finished by rolling in a superficial layer of more 2 to 3 mm rubber granules.

Preferably, glass fibres also are incorporated in the blend and while there may be up to 0.5% by weight of glass fibres, preferably the glass fibre content is 0.3%.

A particularly suitable base layer is built up by the continuous application of batches made from 26 parts by weight of rubber granules having dimensions in the range of 2 to 6 mm and 10 parts by weight of rubberised bitumen, the mixture also containing 0.5% glass fibres. Over this layer is then applied the wear layer having a greater proportion of bitumen as in the Example batch alone.

While, for maximum resilience, it is preferred that the wear layer be applied over a resilient base layer, substantial protection and a suitable product can be achieved simply by laying the wear layer as a topping over a layer of Macadam or the like.

## Claims

1. A safety surface material comprising a flexible wear layer comprising a mixture of polymerised bitumen and rubber chips in the size range of 2 to 10 mm, preferably 2 to 7 mm.

2. A safety surface material according to claim 1, wherein the wear layer has been hot applied to a base layer itself including bituminous material.

3. A safety surface material according to claim 1 or 2, wherein the bitumen has been polymerised with a block copolymer.

4. A safety surface material according to claim 1, 2 or 3, wherein the wear layer is reinforced with glass fibres.

5. A safety surface material comprising a base layer comprising rubber chips bound with a bitumen material and a flexible wear layer provided on said base layer.

6. A safety surface material according to claim 5, wherein the chip size of the base layer rubber chips lies in the range of 2 to 10 mm.

7. A safety surface material according to claim 5 or 6, wherein the wear layer comprises rubber chips bound with a flexible synthetic plastics material.

8. A safety surface material according to claim 5 or 6, wherein the wear layer comprises a flexible synthetic plastics material applied to the top of the base layer.

9. A safety surface material according to claim 5, wherein the wear layer is in accordance with any one of claims 1 to 4.

10. A safety surface material according to claim 9, wherein the chip size for the wear layer is the same as or smaller than that of the base layer.

11. A safety surface material according to any one of claims 5 to 10, wherein the base layer is reinforced with glass and/or metal fibres included therein.

12. A safety surface material according to claim 5, or any preceding claim appendant thereto, wherein the base layer and the wear layer together have a total thickness of from 50 to 100 mm, preferably approximately 75 mm.

13. A safety surface material according to any preceding claim, wherein the wear layer has a thickness of up to 50 mm, preferably in the range of 3 to 10 mm.

14. A safety surface material according to any preceding claim, wherein the material is in the form of preformed tiles or strips.

15. A method of applying a safety surface material wherein a base layer comprising rubber chips and bitumen is applied to the site and is then covered by the flexible wear layer of any one of claims 1 to 4.

16. A method according to claim 15, wherein the base layer is built up by the hot application of material comprising ten parts by weight rubberised bitumen with twenty six parts by weight of rubber granules and 0.5% glass fibres.

# EUROPEAN SEARCH REPORT

| | DOCUMENTS CONSIDERED TO BE RELEVANT | | EP 90300182.4 |
|---|---|---|---|

| Category | Citation of document with indication, where appropriate, of relevant passages | Relevant to claim | CLASSIFICATION OF THE APPLICATION (Int Cl.⁵) |
|---|---|---|---|
| X | <u>US - A - 4 420 524</u> (GORGATI) * Claims; column 5, lines 24-27, 46-64 * -- | 1-5,7-10,16 | C 04 B 41/48 C 08 L 95/00 E 04 D 5/10 E 04 F 15/16 B 32 B 11/00 B 32 B 11/02 |
| X | <u>DD - A1 - 252 213</u> (VEB VERKEHRS- UND TIEFBAU- -KOMBINAT LEIPZIG) * Totality * -- | 1,5,7-9,15 | |
| X | <u>JP - A - 54-6 321</u> (YAMADA T.) * Totality * -- | 1,2,4,5,7 | |
| A | <u>EP - A1 - 0 263 248</u> (RÜTGERSWERKE AKTIENGESELL-SCHAFT) * Totality * ---- | 1,5 | |

| TECHNICAL FIELDS SEARCHED (Int Cl⁵) |
|---|
| C 04 B C 08 L E 04 D E 04 F B 32 B |

The present search report has been drawn up for all claims

| Place of search | Date of completion of the search | Examiner |
|---|---|---|
| VIENNA | 29-03-1990 | BECK |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82